# EUROPÄISCHE PATENTSCHRIFT

(11) **EP 3 500 765 B1**
(45) Veröffentlichungstag und Bekanntmachung des Hinweises auf die Patenterteilung: **20.01.2021**
(21) Anmeldenummer: 17743002.2
(22) Anmeldetag: 17.07.2017
(51) Int. Cl.: F16C 7/02, F16C 11/06

(54) **HYBRIDBAUTEIL UND VERFAHREN ZU DESSEN HERSTELLUNG**
HYBRID COMPONENT AND METHOD FOR THE PRODUCTION THEREOF
ÉLÉMENT HYBRIDE ET PROCÉDÉ DE FABRICATION ASSOCIÉ

(30) Priorität: 17.08.2016 DE 102016215417
(43) Veröffentlichungstag der Anmeldung: 26.06.2019
(73) Patentinhaber: ZF Friedrichshafen AG, 88046 Friedrichshafen (DE)
(72) Erfinder: GREVEMEYER, Philipp, 49080 Osnabrück (DE); NACHBAR, Frank, 49088 Osnabrück (DE); LAMLA, Dirk, 49565 Bramsche (DE)
(74) Vertreter: ZF Friedrichshafen AG
(86) Internationale Anmeldenummer: PCT/EP2017/067978
(87) Internationale Veröffentlichungsnummer: WO 2018/033320

(56) Entgegenhaltungen:
- EP-A2- 2 886 886

## Beschreibung

Die Erfindung betrifft ein Hybridbauteil für ein Fahrwerk von Kraftfahrzeugen, insbesondere Hybridpendelstütze, bestehend aus einer Verbindungsstange mit an ihren beiden Enden angeordneten Profilierungen Kugelgelenken mit Kunststoffgehäusen, die durch Umspritzen mit der Verbindungsstange verbunden sind, wobei die Kugelgelenke schaftartige Verlängerungen aufweisen, die die Verbindungsstange umschließen, und sich auf einem Schaft der Verbindungsstange überdecken.

Die Erfindung betrifft ferner ein Verfahren zur Herstellung eines derartigen Hybridbauteils.

Derartige Hybridbauteile werden hauptsächlich als Pendelstützen oder Koppelstangen im Fahrwerksbereich von Kraftfahrzeugen eingesetzt. Sie verbinden beispielsweise einen Stabilisator mit dem Fahrwerksaufbau. Hierbei müssen sie Zug-, Druck- und Torsionskräfte aufnehmen. Gleichzeitig sind sie Verschmutzung, Feuchtigkeit und Korrosion durch Regen, Schnee und Salzwasser ausgesetzt. Bisher werden Verbindungsstangen aus Metall verwendet, an deren Enden Kugelgelenke aus Metall befestigt sind. Insbesondere die Verbindungsstange muss bislang gegen Korrosion geschützt werden, was deren Herstellung verteuerte.

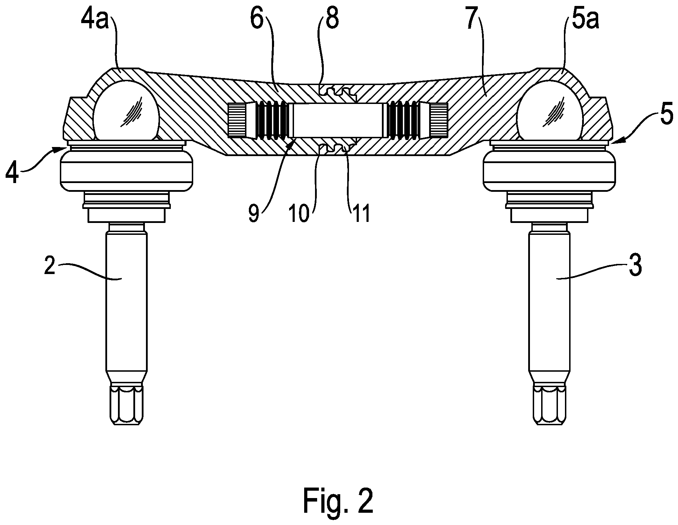

Aus der EP 2 886 886 A2 ist ein Hybridbauteil der eingangs genannten Art bekannt. Dabei wird im Ausführungsbeispiel nach Fig. 2 eine metallene Verbindungsstange durch Anspritzen von Koppelteilen mit schaftartigen Verlängerungen aus Kunststoff ummantelt. Da zuerst eine Seite der Verbindungsstange ummantelt wird, muss zur feuchtigkeitsdichten Abdichtung der Nahtstelle zwischen den beiden Enden der schaftartigen Verlängerungen bei der Herstellung des zweiten Koppelteils mit seiner schaftartigen Verlängerung eine Überdeckung an der Nahtstelle geschaffen werden. Zur Verdrehsicherung weist die Verbindungsstange an ihren beiden Enden eine erste Profilierung auf und für die Aufnahme von Zugkräften eine zweite Profilierung.

Ein derartiger Aufbau eines Hybridlenkers gewährleistet keine ausreichende Abdichtung der Verbindungsstange über ihre Lebensdauer. Daneben wird eine Torsions-sicherung alleine durch die endseitigen Profilierungen der Verbindungsstange erreicht.

Es ist Aufgabe der vorliegenden Erfindung, bei einem Hybridbauteil der eingangs genannten Art eine effektive Erhöhung der Torsionsfestigkeit des Hybridbauteils zu erzielen. Weiterhin ist es Aufgabe dieser Erfindung, ein hierfür geeignetes Herstellverfahren zu schaffen.

Diese Aufgabe wird durch den unabhängigen Patentanspruch 1 gelöst. Vorteilhafte Ausgestaltungen sind in den von diesem abhängigen Patentansprüchen wiedergegeben, welche, jeweils für sich genommen oder in verschiedenen Kombinationen miteinander, einen Aspekt der Erfindung darstellen können.

Danach wird im sich überdeckenden Bereich der schaftartigen Verlängerungen auf deren einander zugewandten Flächen eine Profilierung angeordnet. Durch diese Profilierung wird die Sicherheit gegen Torsion erheblich erhöht, weil sie einmal über die Profilierung der Verbindungsstange und dann auch über den Überdeckungsbereich der beiden schaftartigen Verlängerungen der Kugelgelenke erreicht werden kann, also der Bauteile, in die die Torsionskräfte unmittelbar eingeleitet werden. Auch wird dadurch die Torsionsfestigkeit bei Hybridlenkern erhöht, bei denen die Anbindungspunkte der beiden Koppelteile mit ihren übrigen Bauteilen gegeneinander verdreht sind.

Die Weiterbildungen der Erfindung nach den Patentansprüchen 2 bis 5 beschreiben geeignete Profilierungen im Überdeckungsbereich, die eine Torsion verhindern. So kann der Endbereich der schaftartigen Verlängerung mehreckig, beispielsweise sechseckig, ausgebildet sein. Daneben ist es denkbar, auf dem Außenumfang einer mehreckigen oder runden Kontur des Endbereiches verteilt Öffnungen, beispielsweise sacklochartige Vertiefungen, einzuformen. In diesen Vertiefungen dringen dann die sich bei der Herstellung der zweiten schaftartigen Verlängerung herausbildenden Zapfen aus Kunststoff ein. Anstelle von Vertiefungen können auch Erhebungen angeformt werden, die dann bei der Herstellung des Endbereiches der zweiten schaftartigen Verlängerung umspritzt werden.

Eine andere Möglichkeit einer verdrehsicheren Verbindung besteht darin, auf dem Aussenumfang im Endbereich der zuerst hergestellten schaftartigen Verlängerung Nuten vorzusehen. Diese verlaufen achsparallel, quer zur Längsachse der schaftartigen Verlängerung oder als Gewindenuten mit gleichen, unterschiedlichen bzw. gegenläufigen Gewindegängen. In diese greifen dann die Rippen des anschließend hergestellten Kugelgelenks ein und verzahnen sich somit.

Um eine effektive Abdichtung des sich überdeckenden Bereiches zu erzielen, weisen die beiden Endbereiche zusätzlich zu der in den Patentansprüchen 2 bis 5 beschriebenen Profilierung zur Verdrehsicherung noch eine Profilierung nach der Weiterbildung der Patentansprüche 6 und 7 auf. So können bei einem mehreckigen Endbereich zusätzlich auf dessen Außenumfang eine Wellenkontur oder eine Gewindekontur oder mehrere schiefe Ebenen ausgebildet werden. Ebenso können derartige Ausgestaltungen zur Abdichtung bei den übrigen Ausgestaltungen zur Torsionssicherheit angewandt werden.

Vorteilhaft ist es, wenn die schaftartige Verlängerung des zuerst hergestellten Koppelteils im Bereich der Profilierung eine Stufe im Sinne einer Querschnittsverringerung aufweist. Die Höhe der so gebildeten Stufe entspricht bevorzugt der Dicke des Endbereiches der zweiten schaftartigen Verlängerung, so dass der Aussenumfang der Verbindungsstange ohne Absatz ausgestaltet sein kann.

Es hat sich bei der erfindungsgemäßen Profilierung als vorteilhaft herausgestellt, wenn die an sich bekannte Profilierung der Verbindungsstange so ausgestaltet ist, dass an ihren beiden äußeren Endbereichen jeweils eine Stirnverzahnung vorgesehen ist, die der Verdrehsicherung dient. Dann kann der innere Endbereich der Profilierung zur Aufnahme der Zugkräfte dienen. Hierzu kann er vorteilhafterweise analog einer Labyrinthdichtung aus einzelnen Rillen bestehen.

Neben dem bekannten Rundprofil für die Verbindungsstange können aufgrund des erfindungsgemäßen Aufbaus auch andere Profilarten gewählt werden, die sich optimal für die im Betrieb des Kraftfahrzeuges eintretenden Belastungsfälle eignen. So können Mehrkantprofile oder auch U-, L- W-, V-, T-, X-, Doppel-I-Profile eingesetzt werden.

Ein Verfahren zur Herstellung eines Hybridbauteils gemäß der Erfindung zeichnet sich dadurch aus, dass nach dem Einlegen der Verbindungsstange in ein Kunststoff-Spritzgußwerkzeug die Verbindungsstange auf ihrem Umfang abgedichtet wird, dann zumindest ein Teil des Kugelgelenks mit seiner schaftartigen Verlängerung und einer Profilierung in seinem Endbereich gespritzt wird, wobei die schaftartige Verlängerung bis zu der Abdichtung reicht, sodann die Abdichtung entfernt und der Umfang der gerade hergestellten schaftartigen Verlängerung außerhalb der Profilierung abgedichtet wird und schließlich zumindest ein Teil des zweiten Kugelgelenks mit seiner schaftartigen Verlängerung gespritzt wird.

Je nach Profil der Verbindungsstange wird die erste Abdichtung so ausgestaltet, dass sie ihre Aufgabe auch bei nichtrunden Profilen erfüllen kann. Die erste Abdichtung wird bevorzugt an einer Stelle der Verbindungsstange geschaffen, die eine Umspritzung bis über die Mitte des Schaftes der Verbindungsstange erlaubt. Sie kann sich auch direkt an der Profilierung der Verbindungsstange anschließen, die im ersten Spritzgsvorgang frei bleiben muss. Damit können auch kleinere Bauformen von Hybridbauteilen hergestellt werden.

Werden nichtrunde Profile für die Verbindungsstange ausgewählt, so kann deren Kontur nur an der Stelle der ersten Abdichtung derart gewählt werden, dass sie eine Abdichtung im Spritzgusswerkzeug erleichtert.

Die zweite Abdichtung wird dann auf der schaftartigen Verlängerung des zuerst hergestellten Kugelgelenks unmittelbar außerhalb ihrer Profilierung angebracht. Da die Kontur in diesem Bereich in der Regel rund ist, ist die Abdichtung hier einfach zu bewerkstelligen. Das zweite Kugelelement wird dann mit seiner schaftartigen Verlängerung bis zu dieser zweiten Abdichtung im Spritzguss hergestellt, so dass die Profilierung der ersten schaftartigen Verlängerung in einem Arbeitsgang überdeckt wird.

Durch das vollständige Umschließen der Verbindungsstange wird ihre Verschmutzung - auch bei verschmutzungsanfälligen Profilkonturen - sicher verhindert.

Gemäß einer Weiterbildung der Erfindung kann ein Kugelgelenk vorgesehen sein, dessen Kugelgelenkgehäuse in den beiden Spritzgußvorgängen hergestellt wird. Der metallene Kugelzapfen wird dann anschießend montiert.

Alternativ ist es gemäß einer weiteren Ausgestaltung der Erfindung auch möglich, den metallenen Kugelzapfen neben der Verbindungsstange direkt in das Spritzgußwerkzeug einzulegen und zu umspritzen. Damit vereinfacht sich die Herstellung des Hybridbauteils weiter.

Die Erfindung ist nicht auf die angegebene Kombination der Merkmale der unabhängigen Patentansprüche 1 und 12 mit den Merkmalen der von diesen abhängigen Patentansprüche beschränkt. Es ergeben sich darüber hinaus weitere Möglichkeiten, einzelne Merkmale, insbesondere dann, wenn sie sich aus den Patentansprüchen, der nachfolgenden Beschreibung der Ausführungsbeispiele oder unmittelbar aus den Figuren ergeben, miteinander zu kombinieren. Außerdem soll die Bezugnahme der Patentansprüche auf die Figuren durch die Verwendung von Bezugszeichen den Schutzumfang der Patentansprüche auf keinen Fall auf die dargestellten Ausgestaltungsbeispiele beschränken.

Zur weiteren Erläuterung der Erfindung wird auf die Zeichnungen verwiesen, in denen ein Ausführungsbeispiel eines erfindungsgemäßen Hybridbauteils vereinfacht dargestellt ist. Es zeigen:
- Fig. 1: eine perspektivische Darstellung eines Hybridlenkers mit Kugelgelenken als Koppelteile,
- Fig. 2: einen Längsschnitt durch den Hybridlenker nach Fig. 1,
- Fig. 3: eine perspektivische Ansicht eines Kugelgelenkgehäuses mit schaftartiger Verlängerung und einer Profilierung am freien Ende als ein Koppelteil,
- Fig. 4: eine Seitenansicht einer runden metallenen Verbindungsstange mit einer Stirnverzahnung an ihren beiden Enden,
- Fig. 5: eine Seitenansicht einer runden metallenen Verbindungsstange mit schrägen Ebenen an ihren beiden Enden,
- Fig. 6a bis 6d: vier einzelne Verfahrensschritte zur Herstellung des erfindungsgemäßen Hybridlenkers nach Fig. 1.

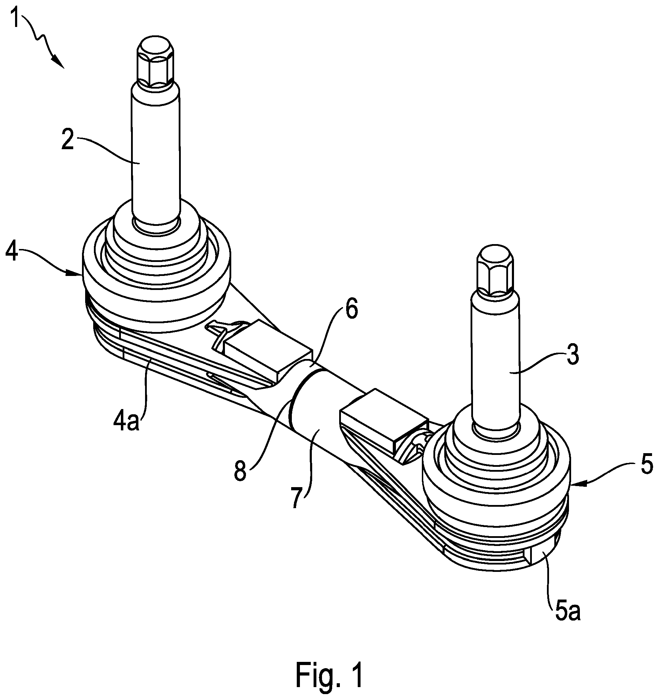

In Fig. 1 ist als Hybridbauteil ein Hybridlenker 1, auch "Hybridpendelstütze" genannt, perspektivisch dargestellt. Derartige Hybridlenker werden als Koppelstangen an Fahrwerken von Kraftfahrzeugen verwendet. Hierbei sind sie Feuchtigkeit und Verschmutzungen ausgesetzt und müssen sowohl Zug- und Druckkräfte als auch Torsionskräfte übertragen.

Der Hybridlenker 1 weist an seinen beiden Enden Kugelzapfen 2 und 3 von Kugelgelenken 4 und 5 auf, die jeweils in einem aus Kunststoff bestehenden Gehäuse 4a und 5a schwenkbar gelagert sind. Die Kontur der Kugelgelenkgehäuse 4a und 5a wird nach Festigkeitsgesichtspunkten ausgelegt.

Eine in Fig. 1 nicht sichtbare Verbindungsstange 9 zwischen den beiden Kugelgelenken 4 und 5 wird vollständig von schaftartigen Verlängerungen 6 und 7 umschlossen, die einstückig mit den Gehäusen 4 und 5 der Kugelgelenke 4 und 5 und somit ebenfalls aus Kunststoff hergestellt sind. Die schaftartigen Verlängerungen 6 und 7 stoßen im gezeigten Ausführungsbeispiel in etwa in der Mitte der Verbindungsstange an einer Nahtstelle 8 zusammen. Diese Nahtstelle 8 ist besonders abgedichtet, wie der Längsschnitt in Fig. 2 zeigt.

Wie in Fig. 2 dargestellt, umschließen die beiden schaftartigen Verlängerungen 6 und 7 die nunmehr sichtbare Verbindungsstange 9 vollständig. Um zu verhindern, dass über die Nahtstelle 8 Feuchtigkeit an die Verbindungsstange 9 gelangen kann, weist das vordere Ende der schaftartigen Verlängerung 6 eine Stufe 10 auf. Auf dem Außenumfang des abgesetzten Teils der Stufe 10 sind nach Art einer Labyrinthdichtung eine oder mehrere koaxial angeordnete Ringe 11 hergestellt. Diese Ringe werden von dem freien Ende der zweiten schaftartigen Verlängerung 7 umschlossen, so dass eine glatte Außenseite im Bereich der Nahtstelle 8 gebildet wird.

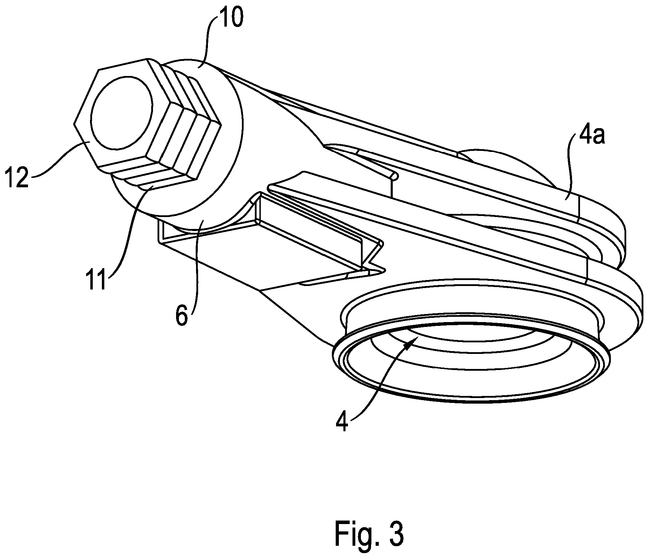

Fig. 3 zeigt als Beispiel eine perspektivische Ansicht des Gehäuses 4a des Kugelgelenkes 4. Hier ist sichtbar, dass das vordere freie Ende der schaftartigen Verlängerung 6 zusätzlich zu den als Dichtung dienenden Ringen 11 noch mehreckig, im konkreten Fall sechseckig, ausgebildet wurde. Das Sechseck 12 dient der Erhöhung der Torsionssteifigkeit des Hybridlenkers 1. Somit erfüllt das vordere freie Ende der beiden schaftartigen Verlängerungen 6 und 7 zwei Funktionen, nämlich zum Einen eine Dichtungsfunktion und zum Anderen dient es der Erhöhung der Torsionssteifigkeit.

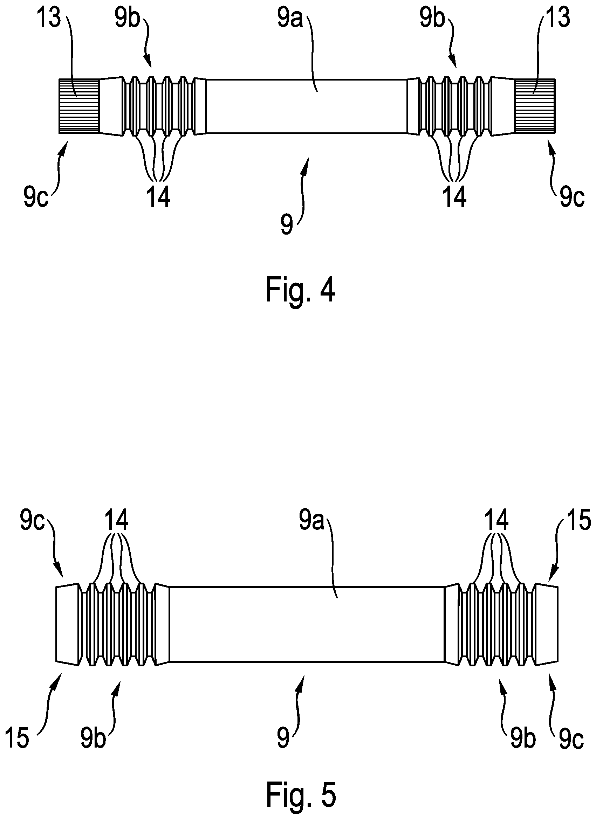

In den Fig. 4 und 5 sind zwei bevorzugte Ausgestaltungen der Verbindungsstange 9 dargestellt. Sie besteht aus einem Schaft 9a, an den sich je zwei Profilierungen anschließen und die jeweiligen Endbereiche 9b und 9c bilden. Die Verbindungsstange 9 ist in diesem gezeigten Beispiel ein Rundprofil. Im Rahmen der Erfindung sind aber auch andere Profilformen denkbar.

In Fig. 4 sind die beiden äußeren Endbereiche 9c der Verbindungsstange 9 mit einer Kerbverzahnung 13 versehen. Sie dienen auch zur Verhinderung der Torsion der beiden Koppelteile des Hybridlenkers zueinander. Die sich nach innen anschließenden Bereiche 9b sind nach Art einer Labyrinthdichtung mit mehreren koaxial angeordneten Ringen 14 versehen. Sie dienen sind zur Erhöhung der Zugfestigkeit des Hybridlenkers gedacht.

In Fig. 5 sind die beiden äußeren Endbereiche 9c alternativ zu der Kerbverzahnung 13 aus je zwei voneinander weg weisenden kreiszylindrischen Kegelstümpfe 15 gebildet. Hier wird dann die Torsionsfestigkeit allein über die Ausgestaltung der schaftartigen Verlängerungen der Koppelteile im Überdeckungsbereich erzielt.

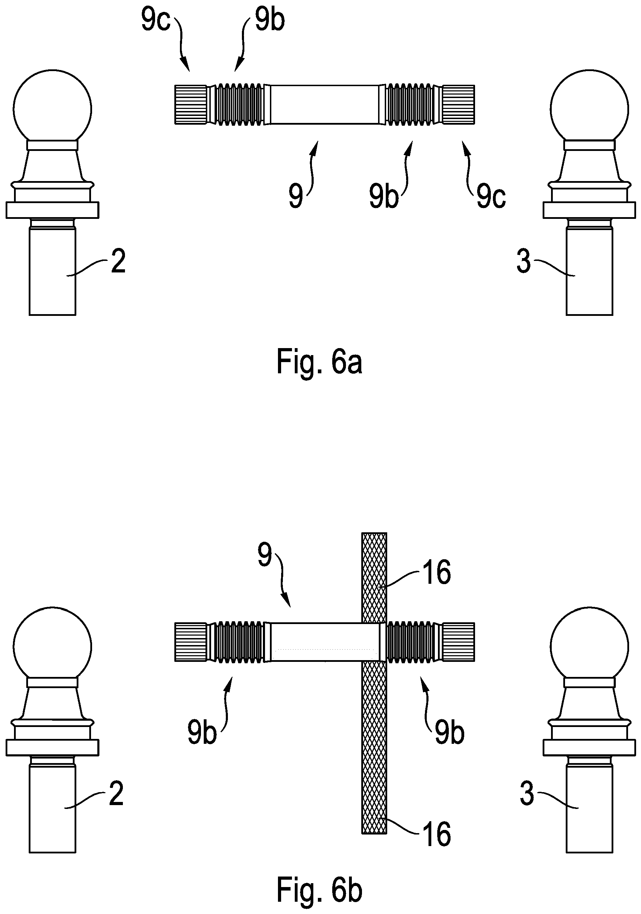

In den folgenden Fig. 6a bis 6d werden die einzelnen Verfahrensschritte zur Herstellung des Hybridlenkers 1 beschrieben. Hergestellt wird er im allgemein bekannten Kunststoffpritzgussverfahren, wobei wegen der besseren Übersichtlichkeit auf die Darstellung des Werkzeugs und der Spritzgussmaschine verzichtet wurde. Auch wird auf die Beschreibung der einzelnen notwendigen Schritte im Kunststoffspritzguss verzichtet, soweit sie nicht durch die Erfindung bedingt sind. Obwohl das erfindungsgemäße Herstellverfahren unter Verwendung eines einzigen Werkzeugs beschrieben wird, können die beschriebenen Herstellungsschritte selbstverständlich auch auf mehreren Werkzeugen durchgeführt werden.

Zuerst werden die beiden vorzugsweise metallenen Kugelzapfen 2 und 3 der Kugelgelenke 4 und 5 sowie die Verbindungsstange 9 in das offene Spritzgußwerkzeug eingelegt. Nach dem Schließen des Werkzeugs wird der Schaft 9a unmittelbar vor seinem rechten inneren Endbereich 9b, also vor Beginn der Labyrinthdichtung, umlaufend abgedichtet. In Fig. 6b ist die Abdichtung schematisiert angedeutet und mit 16 bezeichnet.

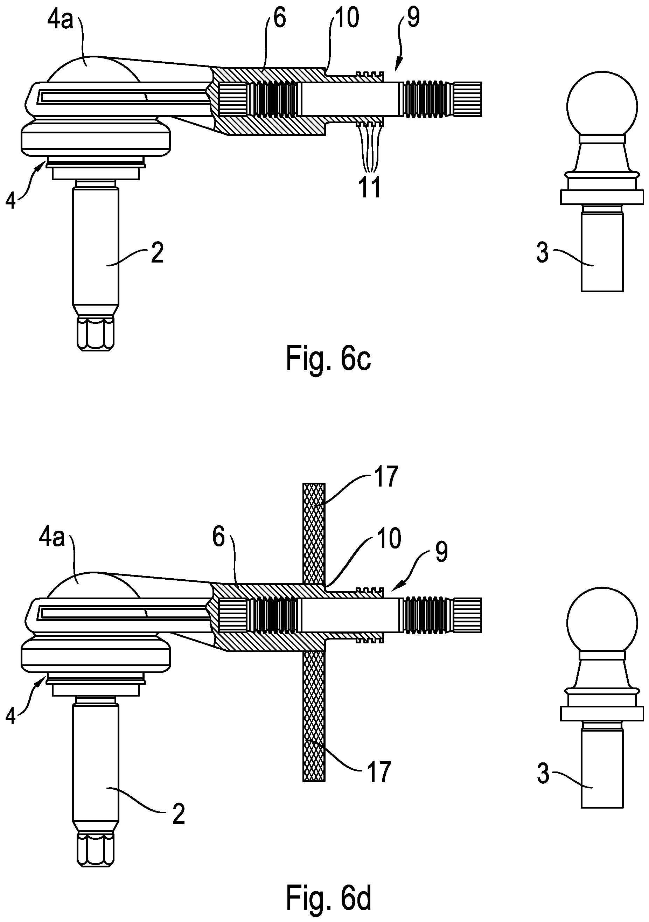

Nun wird das linke Gehäuse 4a mit seiner schaftartigen Verlängerung 6 gespritzt (Fig. 6c). Das Gehäuse 4a umschließt die Kugel des Kugelgelenkes 4. Seine schaftartige Verlängerung 6 reicht bis zur Abdichtung 16. Sie umschließt damit zumindest bis über die Mitte den Schaft 9a der Verbindungsstange 9. Der linke Endbereich 9b, 9c der Verbindungsstange 9 mit der Kerbverzahnung 13 und den Ringen 14 ist ebenfalls vollständig spielfrei umspritzt. Auf dem freien vorderen Ende der schaftartigen Verlängerung ist sowohl die Stufe 10 mit den Ringen 11 als auch die sechseckige Kontur ausgeformt.

Jetzt wird die Abdichtung 16 entfernt bzw. zurückgefahren und auf dem Umfang der schaftartigen Verlängerung 6 wird oberhalb der Stufe 10 eine Abdichtung 17 angebracht, die den Umfang der schaftartigen Verlängerung vollständig abdichtet. Dies ist in Fig. 6d schematisch dargestellt.

Danach kann das rechtsliegende Gehäuse 5a mit seiner schaftartigen Verlängerung 7 gespritzt werden. Auch diese umschließt die Kugel des Kugelgelenkes 5 sowie den rechten, bisher freigebliebenen Endbereich 9b, 9c der Verbindungsstange 9. Weiterhin umschließt das freie Ende der schaftartigen Verlängerung den abgesetzten Teil der Stufe 10 bis zur Abdichtung 17. Damit entsteht die Nahtstelle 8. Durch das Umschließen des abgesetzten Teils der Stufe 10 wird gleichsam eine Verzahnung der beiden schaftartigen Verlängerungen 6 und 7 erreicht, durch die gleichzeitig die Abdichtung gebildet und die Torsionsfestigkeit erhöht wird. Dadurch wird zuverlässig verhindert, dass Feuchtigkeit an die Verbindungsstange 9 gelangt. Sie muss deshalb vorab nicht extra gegen Korrosion behandelt werden. Nun kann der fertige Hybridlenker 1 entnommen werden.

Wird für die Verbindungsstange 9 ein anderes Profil als ein Rundprofil verwendet, so muss die Abdichtung 16 entsprechend in ihrer Dichtkontur angepasst werden oder das Profil der Verbindungsstange wird an der Abdichtstelle so gewählt, dass die Abdichtung sichergestellt werden kann.

Dies ist bei der Abdichtung 17 nicht zwangsläufig der Fall, da diese immer die Außenkontur der schaftartigen Verlängerung abdichtet, die zumindest in dem benötigten Dichtungsbereich rund ausgeführt werden kann.

### Bezugszeichen

- 1: Hybridlenker
- 2: Kugelzapfen
- 3: Kugelzapfen
- 4: Kugelgelenk
- 4a: Gehäuse von 4
- 5: Kugelgelenk
- 5a: Gehäuse von 5
- 6: schaftartige Verlängerung von 4
- 7: schaftartige Verlängerung von 3
- 8: Nahtstelle zwischen 4 und 5
- 9: Verbindungsstange
- 9a: Schaft von 9
- 9b: innerer Endbereich von 9
- 9c: äußerer Endbereich von 9
- 10: Stufe an 2
- 11: Ringe auf 2
- 12: Sechseck an 6, 7
- 13: Kerbverzahnung auf 9c
- 14: Ringe auf 9b
- 15: Kegelstümpfe auf 9c
- 16: Abdichtung
- 17: Abdichtung

## Patentansprüche

1. Hybridbauteil für ein Fahrwerk von Kraftfahrzeugen bestehend aus einer Verbindungsstange (9) mit an ihren beiden Endbereichen (9b, 9c) angeordneten Profilierungen und zwei Kugelgelenken (4, 5) mit Kunststoffgehäusen (4a, 5a), die durch Umspritzen mit der Verbindungsstange (9) verbunden sind, wobei die Kugelgelenke (4, 5) schaftartige Verlängerungen (6, 7) aufweisen, die die Verbindungsstange (9) umschließen und sich auf einem Schaft (9a) der Verbindungsstange (9) überdecken, wobei im sich überdeckenden Bereich der schaftartigen Verlängerungen (6, 7) auf den einander zugewandten Flächen zumindest eine Profilierung angeordnet ist, **dadurch gekennzeichnet, dass** ein Endbereich der jeweiligen schaftartigen Verlängerung (6, 7) zusätzlich auf seinem Außenumfang eine Wellenkontur nach Art einer Labyrinthdichtung aufweist.

2. Hybridbauteil nach Patentanspruch 1, **dadurch gekennzeichnet, dass** die zumindest eine Profilierung als Mehreck oder Sechseck (12) ausgestaltet ist.

3. Hybridbauteil nach Patentanspruch 1 oder 2, **dadurch gekennzeichnet, dass** die Profilierung als nach außen offene auf dem Außenumfang der schaftartigen Verlängerungen (6, 7) verteilt angeordnete Vertiefungen ausbildet ist.

4. Hybridbauteil nach Patentanspruch 1 oder 2, **dadurch gekennzeichnet, dass** die Profilierung als auf dem Außenumfang der schaftartigen Verlängerungen (6, 7) verteilt angeordnete Erhebungen ausgebildet ist.

5. Hybridbauteil nach Patentanspruch 1 oder 2, **dadurch gekennzeichnet, dass** die Profilierung als nach außen offene auf dem Außenumfang der schaftartigen Verlängerungen (6, 7) verteilt angeordnete Nuten ausgestaltet ist.

6. Hybridbauteil nach einem der vorangegangenen Patentansprüche 1 bis 5, **dadurch gekennzeichnet, dass** ein Endbereich der jeweiligen schaftartigen Verlängerung (6, 7) zusätzlich auf seinem Außenumfang eine Gewindekontur aufweist.

7. Hybridbauteil nach einem der vorangegangenen Patentansprüche 1 bis 5, **dadurch gekennzeichnet, dass** der Endbereich der jeweiligen schaftartigen Verlängerung (6, 7) zusätzlich auf seinem Außenumfang schiefe Ebenen aufweist.

8. Hybridbauteil nach einem der vorangegangenen Patentansprüche, **dadurch gekennzeichnet, dass** die schaftartige Verlängerung (6) des ersten Kugelgelenks (4) im Bereich der Profilierung eine Stufe (10) aufweist.

9. Hybridbauteil nach einem der vorangegangenen Patentansprüche, wobei die Verbindungsstange (9) an ihren Endbereichen (9b und 9c) sowohl eine als Verdrehsicherung dienende Profilierung als auch eine als Zugsicherung wirkende Profilierung aufweist, **dadurch gekennzeichnet, dass** die als Verdrehsicherung dienende Profilierung am vorderen Endbereich (9c) der Verbindungsstange (9) als Kerbverzahnung (13) ausgebildet ist.

10. Hybridbauteil nach einem der vorangegangenen Patentansprüche, **dadurch gekennzeichnet, dass** die Profilierung am inneren Endbereich (9b) der Verbindungsstange (9) nach Art einer Labyrinthdichtung ausgebildet ist.

11. Hybridbauteil nach einem der vorangegangenen Patentansprüche, **dadurch gekennzeichnet, dass** die Verbindungsstange (9) ein Mehrkantprofil aufweist.

12. Verfahren zum Herstellen eines Hybridbauteils gemäß einem der vorhergehenden Ansprüche, wobei das Hybridbauteil aus einer Verbindungsstange (9) aus Metall besteht und Kugelgelenke (4 ,5) durch Umspritzen im Kunststoffspritzgussverfahren hergestellt werden, **dadurch gekennzeichnet, dass** nach dem Einlegen der Verbindungsstange (9) in ein Spritzgußwerkzeug die Verbindungsstange (9) auf ihrem Schaft (9a) abgedichtet wird, dann zumindest ein Teil des ersten Kugelgelenks (4) mit seiner schaftartigen Verlängerung (6) und seiner Profilierung in seinem Endbereich gespritzt wird, sodann die Abdichtung (16) entfernt und die hergestellte schaftartige Verlängerung (6) auf ihrem Umfang außerhalb der Profilierung abgedichtet wird und schließlich zumindest ein Teil des zweiten Kugelgelenks (5) mit seiner schaftartigen Verlängerung (7) gespritzt wird.

13. Verfahren nach Patentanspruch 12, **dadurch gekennzeichnet, dass** ein Gehäuse (4a, 5a) als Teil des Kugelgelenks (4, 5) zusammen mit der schaftartigen Verlängerung (6, 7) gespritzt wird und dass der Kugelzapfen (2, 3) anschließend montiert wird.

14. Verfahren nach Patentanspruch 12, **dadurch gekennzeichnet, dass** ein Kugelzapfen (2, 3) zusammen mit der Verbindungsstange (9) in das Spritzgußwerkzeug eingelegt und dass ein Gehäuse (4a, 5a) des Kugelgelenks (4, 5) gemeinsam mit der schaftartigen Verlängerung gespritzt (6, 7) wird.

## Claims

1. Hybrid component for a chassis of motor vehicles, composed of a connecting rod (9) with profilings arranged at its two end regions (9b, 9c) and of two ball joints (4, 5) with plastic housings (4a, 5a) which are connected to the connecting rod (9) by overmoulding, wherein the ball joints (4, 5) have shank-like elongations (6, 7) which surround the connecting rod (9) and which overlap on a shank (9a) of the connecting rod (9), wherein, in the overlapping region of the shank-like elongations (6, 7), at least one profiling is arranged on the mutually facing surfaces, **characterized in that** an end region of the respective shank-like elongation (6, 7) additionally has, on its outer circumference, an undulating contour in the manner of a labyrinth seal.

2. Hybrid component according to Patent Claim 1, **characterized in that** the at least one profiling is configured as a polygon or hexagon (12).

3. Hybrid component according to Patent Claim 1 or 2, **characterized in that** the profiling is formed as outwardly open depressions arranged in a distributed manner on the outer circumference of the shank-like elongations (6, 7).

4. Hybrid component according to Patent Claim 1 or 2, **characterized in that** the profiling is formed as elevations arranged in a distributed manner on the outer circumference of the shank-like elongations (6, 7).

5. Hybrid component according to Patent Claim 1 or 2, **characterized in that** the profiling is configured as outwardly open grooves arranged in a distributed manner on the outer circumference of the shank-like elongations (6, 7).

6. Hybrid component according to any of the preceding Patent Claims 1 to 5, **characterized in that** an end region of the respective shank-like elongation (6, 7) additionally has a thread contour on its outer circumference.

7. Hybrid component according to any of the preceding Patent Claims 1 to 5, **characterized in that** the end region of the respective shank-like elongation (6, 7) additionally has oblique planes on its outer circumference.

8. Hybrid component according to any of the preceding patent claims, **characterized in that** the shank-like elongation (6) of the first ball joint (4) has a step (10) in the region of the profiling.

9. Hybrid component according to any of the preceding patent claims, wherein the connecting rod (9) has, at its end regions (9b and 9c), both a profiling that serves as a rotation-preventing securing means and a profiling that acts as a tensile securing means, **characterized in that** the profiling that serves as a rotation-preventing securing means is formed at the front end region (9c) of the connecting rod (9) as a spline toothing (13).

10. Hybrid component according to any of the preceding patent claims, **characterized in that** the profiling at the inner end region (9b) of the connecting rod (9) is formed in the manner of a labyrinth seal.

11. Hybrid component according to any of the preceding patent claims, **characterized in that** the connecting rod (9) has a polygonal profile.

12. Method for producing a hybrid component according to any of the preceding claims, wherein the hybrid component is composed of a connecting rod (9) made of metal, and ball joints (4, 5) are produced by overmoulding in a plastics injection-moulding process, **characterized in that**, after the placing of the connecting rod (9) into an injection-moulding tool, the connecting rod (9) is sealed off on its shank (9a), then at least a part of the first ball joint (4) is moulded with its shank-like elongation (6) and its profiling in its end region, then the seal (16) is removed and the produced shank-like elongation (6) is sealed off on its circumference outside the profiling, and finally at least a part of the second ball joint (5) is moulded with its shank-like elongation (7) .

13. Method according to Patent Claim 12, **characterized in that** a housing (4a, 5a) as part of the ball joint (4, 5) is moulded together with the shank-like elongation (6, 7), and **in that** the ball pin (2, 3) is subsequently installed.

14. Method according to Patent Claim 12, **characterized in that** a ball pin (2, 3) is placed together with the connecting rod (9) into the injection-moulding tool, and **in that** a housing (4a, 5a) of the ball joint (4, 5) is moulded together with the shank-like elongation (6, 7).

## Revendications

1. Composant hybride pour un châssis de véhicule automobile, composé d'une barre de raccordement (9) ayant des profilages disposés au niveau de ses deux zones d'extrémité (9b, 9c) et deux rotules (4, 5) à boîtiers en plastique (4a, 5a) qui sont reliées à la barre de raccordement (9) par surmoulage, les rotules (4, 5) présentant des rallonges en forme de tige (6, 7) qui englobent la barre de raccordement (9) et se chevauchent sur une tige (9a) de la barre de raccordement (9), au moins un profilage étant disposé sur les surfaces tournées l'une vers l'autre dans la zone de chevauchement des rallonges en forme de tige (6, 7), **caractérisé en ce qu'**une zone d'extrémité de la rallonge en forme de tige (6, 7) respective présente en plus sur sa circonférence extérieure un contour ondulé à la manière d'une garniture en labyrinthe.

2. Composant hybride selon la revendication 1, **caractérisé en ce que** ledit au moins un profilage est configuré sous forme de polygone ou d'hexagone (12).

3. Composant hybride selon la revendication 1 ou 2, **caractérisé en ce que** le profilage est réalisé sous forme de creux ouverts vers l'extérieur et répartis sur la circonférence extérieure des rallonges en forme de tige (6, 7).

4. Composant hybride selon la revendication 1 ou 2, **caractérisé en ce que** le profilage est réalisé sous forme de reliefs répartis sur la circonférence extérieure des rallonges en forme de tige (6, 7).

5. Composant hybride selon la revendication 1 ou 2, **caractérisé en ce que** le profilage est configuré sous forme de rainures ouvertes vers l'extérieur et réparties sur la circonférence extérieure des rallonges en forme de tige (6, 7).

6. Composant hybride selon l'une quelconque des revendications précédentes 1 à 5, **caractérisé en ce qu'**une zone d'extrémité de la rallonge en forme de tige (6, 7) respective présente en plus un contour fileté sur sa circonférence extérieure.

7. Composant hybride selon l'une quelconque des revendications précédentes 1 à 5, **caractérisé en ce que** la zone d'extrémité de la rallonge en forme de tige (6, 7) respective présente en plus des plans inclinés sur sa circonférence extérieure.

8. Composant hybride selon l'une quelconque des revendications précédentes, **caractérisé en ce que** la rallonge en forme de tige (6) de la première rotule (4) présente un gradin au niveau du profilage (10).

9. Composant hybride selon l'une quelconque des revendications précédentes, dans lequel la barre de raccordement (9) présente au niveau de ses zones d'extrémité (9b et 9c) à la fois un profilage servant de dispositif anti-rotation et un profilage agissant comme un dispositif anti-traction, **caractérisé en ce que** le profilage servant de dispositif anti-rotation est réalisé dans la zone d'extrémité avant (9c) de la barre de raccordement (9) sous forme de denture à encoches (13).

10. Composant hybride selon l'une quelconque des revendications précédentes, **caractérisé en ce que** le profilage est réalisé sous la forme d'une garniture en labyrinthe à la zone d'extrémité intérieure (9b) de la barre de raccordement (9).

11. Composant hybride selon l'une quelconque des revendications précédentes, **caractérisé en ce que** la barre de raccordement (9) présente un profil polygonal.

12. Procédé de fabrication d'un composant hybride selon l'une quelconque des revendications précédentes, le composant hybride étant composé d'une barre de raccordement (9) en métal et de rotules (4 ,5) fabriquées par surmoulage selon un procédé de moulage par injection de matière plastique, **caractérisé en ce qu'**après la mise en place de la barre de raccordement (9) dans un moule à injection, la barre de raccordement (9) est scellée sur sa tige (9a), ensuite au moins une partie de la première rotule (4) est moulée avec sa rallonge en forme de tige (6) et son profilage dans sa zone d'extrémité, ensuite le scellement (16) est retiré, et la rallonge en forme de tige (6) fabriquée est scellée sur sa circonférence à l'extérieur du profilage, et enfin, au moins une partie de la deuxième rotule (5) est moulée avec sa rallonge en forme de tige (7) .

13. Procédé selon la revendication 12, **caractérisé en ce qu'**un boîtier (4a, 5a) est moulé comme une partie de la rotule (4, 5) avec la rallonge en forme de tige (6, 7), et **en ce que** le pivot à rotule (2, 3) est monté ensuite.

14. Procédé selon la revendication 12, **caractérisé en ce qu'**un pivot à rotule (2, 3) est placé dans le moule à injection conjointement avec la barre de raccordement (9), et **en ce qu'**un boîtier (4a, 5a) de la rotule (4, 5) est moulé conjointement avec la rallonge en forme de tige (6, 7).
